# EUROPEAN PATENT APPLICATION

(11) **EP 1 704 773 A2**
(43) Date of publication of application: **27.09.2006**
(21) Application number: 06003989.8
(22) Date of filing: 27.02.2006
(51) Int. Cl.: A01K 1/015

(54) **A disposal material for animal excretions and a manufacturing method therefor**

(30) Priority: 24.03.2005 US 88992
(71) Applicant: Yasukawa, Yoichi, Nerima-Ku Tokyo (JP)
(72) Inventor: Yasukawa, Yoichi, Nerima-Ku Tokyo (JP)
(74) Representative: Dey, Michael

(57) **Abstract**

A disposal material for animal excretions is granules of a mixed material which contains (i) 60 - 90 parts of weight of powdered cedar wood material (cuttings, shavings and sawdust) and/or the cedar wood materials remaining as the residues after extracting cedar oil from those cedar wood materials, having sizes of less than or equal to 10 mesh, and (ii) 5-15 parts of weight of a powdered binder. The granules thus manufactured have a bulk density of 0.25 - 0.6 g/cm³ and an absorption capacity of 1.1 -2.0 times its own weight. This disposal material for animal excretions is 100% natural organic, and can be incinerated after use. It has antibacterial, repellant, and fragrant properties, and can be flushed down the toilet.

## Description

### BACKGROUND OF THE INVENTION

### 1. Field of the Invention

The present invention relates to a disposal material for animal excretions in order to treat and dispose of the excretory products of pets and a manufacturing method therefor.

### 2. Description of the Related Art

A type of disposal material for animal excretions has been described in US Patent Number No. 5,836,262.

This disposal material for animal excretions is a man-made granule of a mixture, which contains powdered natural organic materials such as wood powders, powdered Bentonite, powdered highly water absorbable resin, and a powdered binder. This disposal material for animal excretions composed of these raw materials forms clumps because these materials including the powdered Bentonite are moistened and adhere to each other when damped by the excretions, so it is possible to dispose only of the portion of clumps of the disposal material for animal excretions which have absorbed the excretions. However, this disposal material for animal excretions is a mixture containing powdered Bentonite, therefore, it cannot be disposed of as combustible garbage because it is not combusted by ordinary incinerators, and cannot be flushed down the toilet as well.

In recent years, there has been a movement to protect the natural environment by reducing the quantity of garbage. For instance, actions such as combusting wastes without using appropriate combustion facilities, or burying wastes that could give adverse effects on the environment have been strictly regulated. Therefore, it is desirable to have a disposal material for animal excretions which can be combusted by conventional incinerators, and which would not give any adverse effects on the environment if it were buried, such as polluting the soil.

Also, the conventional disposal material for animal excretions has problems because the excretions contained within the clumps could decay, thus, could generate a foul smell, and fleas which latch onto the pet could move to and lay eggs on the disposal material for animal excretions and to cause an infestation of fleas. Examples of these pets include cats, dogs, rabbits, hamsters, marmots, and various kinds of birds.

### SUMMARY OF THE INVENTION

An aspect of the present invention is to provide a disposal material for animal excretions that can be easily combusted after use, and/or flushed down the toilet, and/or has antibacterial effects as well as repellant properties and fragrance.

Yet another aspect of the invention is to provide a manufacturing method of such a disposal material for animal excretions.

According to a first embodiment of the invention, a disposal material for animal excretions is granules of a mixture of powdered materials, wherein (i) 60 - 90 parts of weight of powdered cedar wood materials and/or cedar wood materials remaining as the residues after extracting cedar oil from these powdered cedar wood materials, having sizes of smaller than or equal to 10 mesh, and (ii) 5 - 15 parts of weight of powdered binder are mixed. These granules have a bulk density of 0.25 - 0.6 g/cm³ and an absorption capacity of about 1.1 - 2.0 times its own weight.

According to a second embodiment of the invention, a disposal material for animal excretions is a disposal material for animal excretions as described above for the first embodiment of the invention, wherein the mixture contains a further 3 -10 parts of weight of powdered highly water absorbable resin, and the granules of such mixture have an absorption capacity of about 1.5 - 3.0 times its own weight.

According to a third embodiment of the invention, a manufacturing method of the disposal material for animal excretions includes (a) a mixing process to uniformly mix the mixture which contains (i) 60 - 90 parts of weight of powdered cedar wood materials and/or cedar wood materials remaining as the residues after extracting cedar oil from these cedar wood materials, having sizes of smaller than or equal to 10 mesh and (ii) 5 - 15 parts of weight of a powdered binder; at a rotation speed of 300 - 500 rpm, (b) a granulation process to granulate the mixture; and (c) a drying process to dry the granulated mixture, wherein the dried granules have a bulk density of 0.25 - 0.6 g/cm³, and an absorption capacity of about 1.1 - 2.0 times its own weight.

According to a fourth embodiment of the invention, a manufacturing method of the disposal material for animal excretions is a manufacturing method of the disposal material for animal excretions as described above for the third embodiment of the invention, wherein the powder mixture is mixed within a mixer equipped with at least a first agitator and a second agitator. In this embodiment, the second agitator rotates in the opposite direction to the rotational direction of the first agitator.

According to a fifth embodiment of the invention, a manufacturing method of the disposal material for animal excretions is a manufacturing method of the disposal material for animal excretions as described above for the third embodiment of the invention, wherein the mixture, now turned into wet mixture after water adding/kneading processes, is granulated by a granulation device equipped with a screen having multiple holes of diameter of 2.5 - 5.5 mm and a thickness of 2.5 - 6.5 mm.

According to a sixth embodiment of the invention, a manufacturing method of the disposal material for animal excretions is a manufacturing method of the disposal material for animal excretions as described above for the third embodiment of the invention, wherein the granulated powder mixtures ,or granules, are hot-air dried by a fluidized bed dryer and the hot air is blown into a batch of the granules. Here, the internal temperature of the dryer will be at 80 - 95 °C.

According to a seventh embodiment of the invention, a manufacturing method of a disposal material for animal excretions treats the material powder mixture which is composed of (i) 60 - 90 parts of weight of powdered cedar wood materials and/or cedar wood materials remaining as the residue after extracting cedar oil from these cedar wood materials, having sizes of smaller than or equal to 10 mesh, (ii) 3 -10 parts of weight of powdered highly water absorbable resin, and (iii) 5 -15 parts of weight of powdered binder. The method includes (a) a mixing process to uniformly mix the mixture of the above materials at a rotational speed of 300 - 500 rpm, (b) a granulation process to granulate the said mixture, and (c) a drying process to dry the granulated mixture, or granules, wherein the dried granules have a bulk density of 0.25 - 0.6 g/cm³ and an absorption capacity of about 1.5 - 3 times its own weight.

According to a eighth embodiment of the invention, a manufacturing method of the disposal material for animal excretions, as described above, includes a mixing process to mix the powder mixture with at least a first agitator and a second agitator. Here, the second agitator rotates in the opposite direction to the rotational direction of the first agitator.

According to a ninth embodiment of the invention, a manufacturing method of the disposal material for animal excretions, as described above, includes a granulating process to granulate the powder mixture by a granulating device equipped with a screen having multiple holes of diameter of 2.5 - 5.5 mm and a thickness of 2.5 - 6.5 mm.

According to a tenth embodiment of the invention, a manufacturing method of the disposal material for animal excretions, as described above for the seventh embodiment of the invention, includes a hot-air drying process to dry the granules by a fluidized bed dryer, wherein the hot air is blown into a batch of the granules and the internal temperature of the dryer will be kept at about 80 - 95 °C.

In accordance with further embodiments of the invention, the disposal material for animal excretions is a granulated mixture, wherein the mixture contains (i) 60 - 90 parts of weight of powdered cedar wood materials such as cuttings, shavings and sawdust (hereinafter referred as the "Cedar Wood Powders") and/or cedar wood materials remaining as the residues after extracting cedar oil from these Cedar Wood Powders (hereinafter referred as the "Cedar Wood Residues"), and (ii) 5 -15 parts of weight of a powdered binder.

As preferred herein, the Cedar Wood Powders are cuttings, shavings and sawdust of cedar wood materials generated after manufacturing the primary products which use cedar as the main material, and it is possible to use the Cedar Wood Powders as the raw material of the disposal material for animal excretions. The Cedar Residues are the cedar wood materials remaining as the residues after extraction of the cedar oil by distillation of the Cedar Wood Powders, and it is possible to use this alone as the raw material of the disposal material for animal excretions as well. It is also possible to use a mixture of the Cedar Wood Powders and the Cedar Wood Residues as the material for the disposal material for animal excretions.

Also, it is preferable to use the Port Orford cedar as the cedar wood materials because the US Environmental Protection Agency (EPA) determined that the Port Orford cedar is not toxic towards humans or animals. For example, the Port Orford cedar is presently used for the production of arrows for archery. However, only approximately 10% of the Port Orford cedar wood material is used for making arrows. Therefore, the arrow manufacturing factories are throwing away the majority of the Port Orford cedar wood materials as wastes in the shape of cuttings, shavings and sawdust. These unused portions of the Port Orford cedar wood materials are, at least, in quantity as great as 1,000,000 pounds per annum. The disposal material for animal excretions, therefore, can recycle these wastes of the unused Port Orford cedar wood materials as its main material.

The Port Orford cedar wood materials include cuttings, shavings and sawdust of the Port Orford cedar wood (hereinafter referred as the "Port Orford Cedar Powders") and the Port Orford Cedar Residues are the Port Orford cedar wood materials remaining as the residues after extracting cedar oil from the Port Orford Cedar Powders (hereinafter referred as the "Port Orford Cedar Residues"). This disposal material for animal excretions can use these Port Orford Cedar Powders and Port Orford Cedar Residues as its main material otherwise having been thrown away as wastes.

Ordinary Cedar Wood Powders and Cedar Wood Residues as well as the Port Orford Cedar Powders and the Port Orford Cedar Residues contain "Hinoki-thiol", or cedar thiol.
Hinoki-thiol repels insects such as ticks, mosquitoes, and flies. Therefore, the cedar oil, containing Hinoki-thiol, extracted from the cedar wood materials is, for instance, used as a material of horse shampoos for its repellent properties. After extracting cedar oil from the Port Orford Cedar Powders, the Port Orford Cedar Residues may still contain a content of 50% or more of Hinoki-thiol of the original Port Orford Cedar Powders. However, the Port Orford Cedar Residues are being generally disposed of. Thus, this disposal material for animal excretions, according to embodiments of the present invention, can recycle the Port Orford Cedar Residues as its main material.

Because of the repellant properties of Hinoki-thiol, according to embodiments of the present invention, the disposal material for animal excretions prevents flea infestations by minimizing the movement to and egg-laying of fleas attached to pets on the disposal material for animal excretions. Also, due to the antibacterial properties of Hinoki-thiol that limits bacterial infestation, it prevents the excretions attached to the disposal material for animal excretions from decaying and rotting.

In certain preferred embodiments, more than 80 % of the Cedar Wood Powders (including the Port Orford Cedar Powders) and/or the Cedar Wood Residues (including Port Orford Cedar Residues) should be particles with sizes of smaller than the size of opening of a 60 mesh screen (a single opening in the mesh: 0.246 mm) although the Cedar Wood Powders and/or Cedar Wood Residues sized 10 to 60 mesh are usable depending on the type of a powdered binder and the hole diameter and thickness of the screen of the granulating device. This is because the smaller sized particles are good to ensure a uniform distribution of the powder materials; i.e. the powder binder and the Cedar Wood Powders and/or Cedar Wood Residues, within the mixture when mixing, as well as to increase the water absorption speed and the overall water absorption capacity of the mixture. For use in describing embodiments of the present invention herein, the term "mesh" refers to the mesh according to the Tyler Standards.

In certain preferred embodiments, the powder binder as noted above is a water-absorbable resin that dissolves in water and has an adhesive property in a wet condition. The reason for applying this is that, the powder binder and the Cedar Wood Powders and/or the Cedar Wood Residues become uniformly distributed in the mixture when mixed while water being added, and the granules thus obtained become easier to adhere to each other to form clumps when moistened, and to separate easily from each other and dissolve when flushing the granules down the toilet after use.

Examples of the water-absorbable binder include polyvinyl alcohol (PVA), carboxymethyl cellulose (CMC), methyl cellulose (MC), powdered grout, pullulan, and gelatin. When using powdered grout taken from potatoes as a water-absorbable binder, the powdered binder is easily obtained safety, stably and at low prices from the supermarket. Therefore, the use of the powdered grout as a water-absorbable binder reduces production costs of the disposal material for animal excretions.

It is preferable according to embodiments of this invention that the bulk density of the disposal material for animal excretions should be within the range of 0.25 - 0.6 g/cm³. The reason why it is preferable is that, by keeping the bulk density in that range, the mixture will form soft granules of the disposal material for animal excretions wherein the particles dissolve more easily in water and increase the water absorption speed, then form clumps quickly when moistened.

Preferably, the water absorption capacity of this disposal material for animal excretions was confirmed to be within a preferable range of 1.1 - 2.0 times its own weight. The high water absorption capacity of this disposal material for animal excretions reduces the quantity of the disposal material for animal excretions to be used for a single excretion of the pet. For instance, the weight of the clumps of the disposal material for animal excretions, after the granules of the disposal material for animal excretions adhere to each other when moistened, will be on average 28 - 32 g based on the quantity of cat urine to be discharged by a single urination being estimated at 20 mL, and therefore, the dry weight of the disposal material for animal excretions used is about 8 -12 g. Thus, by using this disposal material for animal excretions, it is possible to minimize the quantity of the disposal material for animal excretions to be used for a single excretion of the cat.

In accordance with embodiments of the present invention, a powdered highly water absorbable resin can be added to the disposal material for animal excretions as described above. The use of a powdered highly water absorbable resin is to increase the water absorption capacity of the disposal material for animal excretions. The powdered highly water absorbable resin preferably is a resin that can maintain a solid form even after having absorbed liquid in the quantity of 50 - 2000 times its own weight. For instance, it is preferable to use vinyl ester and ethylene-family unsaturated carbonic acids or copolymeric derivatives of such, graft polymers of grout and acrylic acid, bridged polyacrylic acid compounds, copolymers of vinyl alcohol and acrylic acid, partial hydrolysis products, bridged carboxymethyl cellulose, bridged polyethylene glycol, chitosan salts, or pullulan gels. In particular, it is preferable that the powdered highly water absorbable resin should contain a carboxylic acid group (-COOH). The reason why is that a polymer containing a carboxylic acid group would react effectively against the ammonia within urine and could decrease sharply the unpleasant odors of cat urine.

The powdered highly water absorbable resin to be used in preferred embodiments of the present invention could be uniformly distributed easily within the mixture.

Preferred embodiments of the disposal material for animal excretions containing a powdered highly water absorbable resin have a content of (i) 60 - 90 parts of weight of the Cedar Wood Powders and/or the Cedar Wood Residues, (ii) 5 -15 parts of weight of the powdered binder, and (iii) 3 -10 parts of weight of the powdered highly water absorbable resin. If the powdered highly water absorbable resin is contained more than 10 parts of weight, the disposal material for animal excretions and the animal excretions (urine) may fail to clump, and the cost of such disposal material for animal excretions should increases. When there is less than 3 parts of weight of the powdered highly water absorbable resin contained, the water-absorption capacity is sure to be degraded.

It is preferable that the water absorption capacity of the disposal material for animal excretions containing powdered highly water absorbable resin according to preferred embodiments of the present invention could be about 1.5 - 3.0 times its own weight. If the water absorption capacity of the disposal material for animal excretions is within the range of 1.5-3.0 times its own weight, the quantity of disposal material for animal excretions to be used for a single excretion of the pet is much reduced. For example, if the weight of the clumps of the disposal material for animal excretions are on average 26 - 30 g when the granules of the disposal material for animal excretions adhere to each other when moistened by a single event of urine by a cat (estimated quantity of urine for a single event to be at 20 mL), the quantity of the disposal material for animal excretions to be used for absorbing a single excretion of a cat would be about 6 -10g, which is much less than the quantity to be used, against a single excretion, of the disposal materials for animal excretions, not containing any powdered highly water absorbable resins.

The manufacturing method of the disposal material for animal excretions according to embodiments of the present invention includes (a) a mixing process which mixes (i) 60 - 90 parts of weight of the Cedar Wood Powders and/or the Cedar Wood Residues sized of 60 mesh or less, and (ii) 5 -15 parts of weight of the powdered binder, (b) a granulating process, and (c) a drying process. It is also possible to use the Cedar Wood Powders and/or the Cedar Wood Residues whose sizes are in the range of 10 - 60 mesh as the main material of the disposal material for animal excretions.

Preferably, the mixing process includes (a) an agitation process, (b) a water adding process, and (c) a kneading process. For this mixing process, a mechanical agitation-type mixing device is used. This mixing device is equipped with a vessel which has a water injection nozzle for adding water and a rotational axis arranged on the inner side of this vessel with a first main agitating blade which agitates and mixes the powdered binder and the Cedar Wood Powders and/or the Cedar Wood Residues and at least with a single second agitating blade set below the first main agitating blade. The second agitating blade rotates in the opposite direction of the rotational direction of the first agitating blade. As the Cedar Wood Residues are dried during distilling and extraction process of cedar oil, it is possible to mix them by the described mixing device without causing any trouble.

The agitating process, the water adding process and the kneading process for the embodiments of the present invention are executed in a batch style. The agitating process and the kneading process are executed by rotating the first agitating blade at a speed of 300 - 700 rpm, or more preferably, at a speed of 500 rpm, and by rotating the second agitating blade in the opposite direction of the first agitating blade at a speed of faster than or equal to 100 rpm. The water adding process is a process where 20 - 36 parts of weight of mixing water is added to the mixture soon after commencement of the first agitating process, and then, while injecting the mixing water, the mixture is further agitated for kneading. Then, the mixing device supplies the wet mixture thus obtained to the subsequent granulation process. Throughout these processes, the mixing device uniformly mixes the wet mixture which has the particles of differing weights and sizes by high-speed rotation for agitation/kneading. In other words, this mixing device uniformly mixes the Cedar Wood Powders and/or the Cedar Wood Residues and the powdered binder and turns the powder mixture into the homogenized wet mixture.

The granulation process of the wet mixture as noted above is executed by use of a vertical extrusion granulating device. This vertical extrusion-granulating device is equipped with a screen having multiple holes of 2.5 - 5.5 mm diameter and a thickness 2.5 - 6.5 mm. When the homogenized wet mixture is forced to pass through the holes of this screen, the mixture is granulated, and the granules thus obtained are then supplied to the subsequent drying process. At this stage, it is desirable to avoid stressing unnecessary excess pressure onto the wet mixture when making granules by using a screen having wider holes and thinner thickness as practically as possible. By adjusting the pressure of this extrusion granulation device, it is possible to ensure that the extruded granules have a bulk density of about 0.25 - 0.6 g/ cm³.

The drying process for the granules as obtained above is preferably executed by use of a fluidized bed dryer. This fluidized bed dryer, equipped with heat and hot air generating devices, uses liquid propane gas (LPG), heavy oil, light oil, heating oil, or organic refuse as the heat source. The hot air generating device produces 120 - 200 °C air and blows the heated hot air into a batch of the granules while the internal temperature of the dryer would be kept at about 80 - 95 °C. As this fluidized bed dryer forms, during the drying operation, uniform fluidized beds inside the batch of the granules by blowing the hot air to them to dry the granules, there would be little fractures of the granules due to reducing particle interaction throughout the drying process. Thus, it is possible for the granules to maintain their shapes as good as to fit to the shapes of the final products and to protect the granules from being heavily damaged.

In accordance with preferred embodiments of the present invention, the manufacturing method of the disposal material for animal excretions can include in the materials a powdered highly water absorbable resin.

The manufacturing method of the disposal material for animal excretions with a powdered highly water absorbable resin preferably contains (i) 60 - 90 parts of weight of the Cedar Wood Powders and/or the Cedar Wood Residues whose sizes are less than or equal to 60 mesh, (ii) 5 -15 parts of weight of powdered binder, and (iii) 3 -10 parts of weight of a powdered highly water absorbable resin. After finishing the mixing process described above, it is possible to manufacture a disposal material for animal excretions with a powdered highly water absorbable resin.

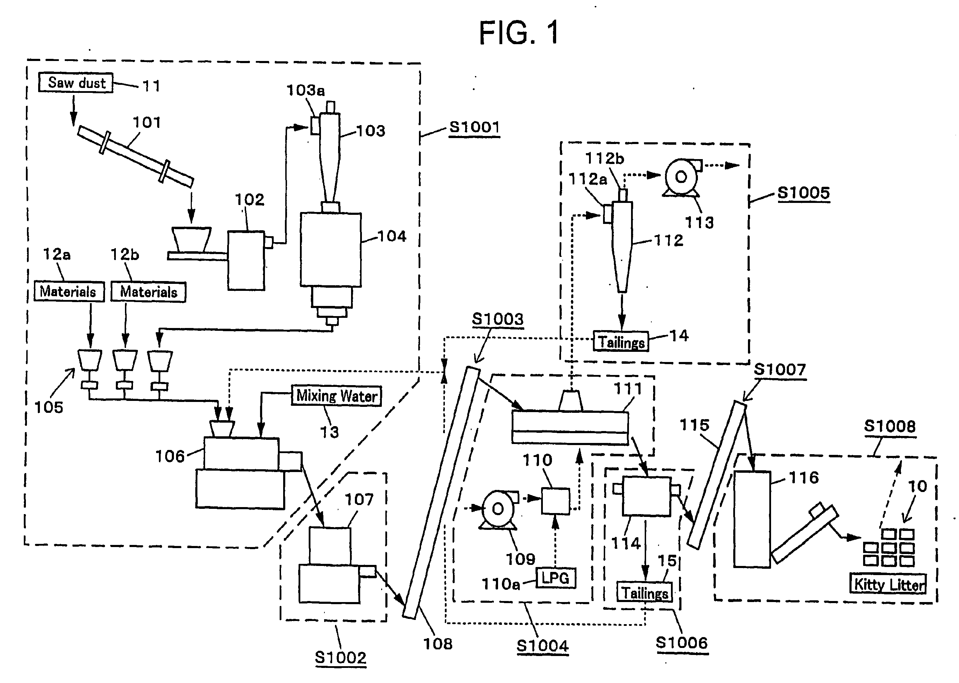

### BRIEF DESCRIPTION OF THE DRAWING

The sole figure is a process diagram of the manufacturing method of the disposal material for animal excretions according to an embodiment of the present invention.

### DETAILED DESCRIPTION OF THE PREFERRED EMBODIMENTS

The present embodiments will be further described now as an example of the manufacturing method of the disposal material for animal excretions for a kitty litter 10.

The process for manufacturing the kitty litter 10 comprises a mixing process (S1001), a granulation process (S1002), a fore-transport process (S1003), a hot-air drying process (S1004), a collection process (S1005), a sifting and separation process (S1006), an aft-transport process (S1007) and a packaging process (S1008).

The mixing process (S1001) includes a raw material drying process, a raw material pulverization process, a dry-type sorting process, a raw material weighing process, and agitation/water-adding/kneading processes. The raw material drying process is a process to dry the raw material 11 and the raw material drying device 101 is used for drying the raw material 11. Meantime, the raw material 11 here is the Cedar Wood Residues as the main material of the disposal material for animal excretions.

The raw material pulverization process is a process to pulverize the raw material 11 that has been dried during the raw material drying process. A raw material pulverizer 102 is an apparatus to pulverize the raw material 11 that was dried by the raw material drying device 101.

The dry-type sorting process is a process that sorts the powdered material pulverized in the raw material pulverization process into particles (microparticles) of which sizes are smaller than the size of the opening of the 60 mesh screen (where the hole opening is 0.246 mm) and other particles (rough particles). However, as it is not possible to perform complete sorting, more than 80% of the wood powder collected will be the microparticles smaller than 60 mesh in their sizes.

Raw material sorting device 103 is a device to sort the powdered materials by size, and is equipped with a cylindrical main body and an entry port 103a to input the powdered materials into the cylindrical main body. This raw material sorting device 103 has also a hopper 104 on its lower side in order to collect the finer microparticles which fall down from the lower part of the cylindrical main body. Thus, the raw material sorting device 103 separates the powdered materials into rough particles and microparticles, and collects the microparticles in the hopper 104.

The raw material weighing process is a process to weigh the microparticles of wood powder material sorted in the dry-type sorting process and other materials 12a and 12b as well to obtain a mixed material at the desired mixture ratio.

Weighing stage 105 consists of multiple hoppers and weighing devices set below those hoppers. The microparticles, which were sorted in the dry-type sorting process, as well as the other materials 12a and 12b, are respectively weighed by the weighing devices after having been supplied to their respective hoppers. Then, the weighing stage 105 will supply the mixed powder material, which consists of the microparticles of wood powder material and the raw materials 12a and 12b, to the raw material mixing device 106.

The agitating/water-adding/kneading process as noted above is a process to obtain a homogenized wet mixture where the materials weighed in the raw material weighing process are uniformly mixed by agitating, water-adding, and then kneading operation. The raw material mixing device 106 is a device to agitate, add water, and knead this mixed material. The raw material mixing device 106 has a mixing vessel with a water injection nozzle, a main agitating blade for agitating the mixed material which is located on the rotational axis set on the inner side of this mixing vessel. The raw material mixing device 106 has also multiple supplementary agitation blades located on the lower side of this main agitation blade that rotate in the opposite direction to the rotational direction of the main agitation blade.

The raw material mixing device 106 is supplied with the mixed material comprising 80 parts of weight of the microparticles of wood powder material, more than 80 % of which are in the sizes of smaller than or equal to 60 mesh, 10 parts of weight of CMC, which is the raw material 12a, and 10 parts of weight of grout, which is the supplementary raw material 12b, to its mixing vessel from the raw material weighing process.

The agitation process is performed by rotating the main agitating blade at a speed of 500 rpm, and the supplementary agitation blades in the opposite direction at a speed of 100 rpm. The water-adding process is a process to inject 25 parts of weight of mixing water 13 into the mixing vessel via the water injection nozzle while agitation is being continued. The kneading process is a process to further agitate the mixture, for obtaining a homogenized wet mixture, for another 3 minutes after the mixing water 13 has been injected. The mixture thus obtained through these agitation/water-adding/kneading processes is uniformly mixed in wet condition.

The granulation process (S1002) is a process to granulate the wet mixture that was uniformly mixed in the above described mixing process (S1001). The granulation device 107 is a vertical extrusion granulation device, and is equipped with a cylindrical main body, a screen with multiple holes of 3.5 mm diameter and thickness of 4.0 mm, and rollers arranged above the screen in contact with the mixture in the main body. The cylindrical main body is equipped with a rotational main axis arranged in the center of the main body in the direction of perpendicular to the screen, and with multiple rotational axes for the rollers which are connected rectangular to the main axis and arranged in parallel to the screen at the position to make them contact the mixture above the screen. The rollers are set for each rotational axis, and rotate about their respective rotational axes in accordance with the rotation of the main axis.

The granulation device 107 applies pressure to the wet mixture by rotating the rollers which are positioned in contact with the wet mixture above the screen through rotation of the main axis. The wet mixture is granulated by passing through the holes of the screen as the rollers rotate. Since the screen here has the holes having diameter as large as 3.5 mm and thickness as thin as 4.0 mm, it would never give unnecessary pressure onto the wet mixture when granulating by passing it through the holes of the screen. Thus, it is possible to obtain the wet granules having bulk density of 0.3 g/cm³.

The fore-transport process (S1003) transports the wet granules that were granulated in the granulation process (S1002). The conveyer 108 is a device to transport the wet granules to the fluidized bed drying apparatus 111.

The hot-air drying process (S1004) dries the wet granules that were transported by the fore-transport process (S1003). The fluidized bed drying apparatus 111 is a device to dry the granules by hot-air, and is connected to a blower 109. The fluidized bed drying apparatus 111 blows 160 °C hot air into a batch of the granules from a hot-air generating device 110 which uses LPG or other type of fuel source 110a as the fuel, and keeps the internal temperature of the drying apparatus at 90 °C. When hot-air is blown into the fluidized bed drying apparatus 111, a batch of the granules inside are dried by the hot-air while forming a uniform fluidized layer. Because of this way of drying, fractures of the granules are minimized due to reduced bumping, and shapes of the granules remain less-breakable.

The collection process (S1005) collects tailings 14 generated from the hot-air drying process (S1004) of the granules. A cyclone 112 is a device to be used for collection of the tailings 14, and is equipped with a cylindrical main body, an entry port 112a for receiving the tailings 14, and an exhaust port 112b for discharging air from the cylindrical main body, etc. The cyclone 112 has on its upper side an exhaust fan 113 that is connected to the exhaust port 112b.

In the cyclone 112, a cyclonic air flow is generated within the cylindrical main body due to the vacuum power of the fan 113. The tailings 14 have a centrifugal force due to this cyclonic air flow. Therefore, when separated from the midst of this cyclonic air flow, the tailings reach to the inner walls of the cylindrical main body and are collected as they fall from the lower part of the main body. These tailings 14 are then returned to the raw material mixing device 106 for reuse as illustrated in the figure by the dash line and arrow.

The sifting and sorting process (S1006) sifts the granules that were hot-air dried in the former hot-air drying process S1004 and then sorts the dried granules by sizes. Vibrating sieve 114 which receives the dried granules from a drying apparatus 111, is a device that has hole openings of 6.0 mm and 1.5 mm. When the sieve is vibrated, the granules is sifted and sorted in accordance with the particle sizes, i.e. (i) a particle group having a diameter of 6.0 mm or more, (ii) a particle group having a diameter in between 1.5 to 6.0 mm, and (iii) a particle group having a diameter of 1.5 mm or less.

The particle group (ii) as above classified is supplied onto the conveyer 115, and the particle groups (i) and (iii) are collected as a Tailing 15 and returned to the raw material mixing device 106 for reuse as illustrated in the figure by the dash line and arrow.

The aft-transport process (S1007) transports the dried granules with a diameter in between 1.5 to 6.0 mm after the sifting and sorting process (S1006). The conveyer 115 is an apparatus to transport these granules to the packaging apparatus 116.

The packaging process (S1008) packages the granules that were transported by the aft-transport process (S1007). The packaging apparatus 116 is an apparatus to package a predetermined quantity of the granules into the kitty litter 10 as final product.

The bulk density of the kitty litter thus manufactured was then measured. First, samples of kitty litter 1 - 6 were taken, placed into 1000 mL test tubes to the top division of the test tube, and then weighed. Then, by dividing the weights of the samples 1 - 6 by the volume of 1000 mL, the bulk density was calculated. The results are shown in Table 1.

The Product Example 1 is the sample of kitty litter that does not contain the powdered highly water absorbable resin and the Product Example 2 is a sample of kitty litter that contains the powdered highly water absorbable resin. The kitty litter of the Product Example 2 was manufactured by adding 6 parts of weight of a powdered highly water absorbable resin to the material mixture composed of 80 parts of weight of microparticles of wood powder where more than 80% of the particles have a mesh size of 60 or less, 8 parts of weight CMC, and 6 parts of weight grout in the raw material mixing device 106 in order to increase the water absorption capacity.

**Table 1**

| Sample Name | | Bulk density (g/cm^{**3**}) |
|---|---|---|
| Product Example 1 | 1 | 0.30 |
| (No powdered highly water absorbable resin) | 2 | 0.28 |
| | 3 | 0.29 |
| Product Example 2 | 4 | 0.31 |
| (With powdered highly water absorbable resin) | 5 | 0.29 |
| | 6 | 0.30 |

According to Table 1, the kitty litter of the Product Example 1 has an average bulk density of 0.29 g/cm³ while the kitty litter of the Product Example 2 has an average bulk density of 0.30 g/cm³ . As a result, when compared the kitty litters of the Product Examples 1 and 2 with the conventional store-bought Bentonite-based kitty litter (normally, its average bulk density is 1.0 g/cm³), the bulk densities were apparently reduced to less than a third. Therefore, in accordance with embodiments of the present invention, the kitty litter is manufactured at a low cost, and with a high water absorption capacity in comparison with the store-bought mineral-based kitty litter.

It was also determined as to the number of excretions events that a 10 L bag of kitty litter could be used for. First, spread out the above described kitty litters of the Product Examples 1 and 2, and poured 20 mL saline solution with a concentration of 9.0 g salt dissolved in 1.0 L water onto the central part of the dry kitty litter, and then, measured the weight of a clump of the kitty litter that was formed as a result of having been moistened by the 20 mL saline solution. Next, based on the weight of a clump as above measured, the number of times that the product could be used for was calculated. Because the salt concentration of the saline solution used for the above test was 0.9%, it was assumed to correspond to the cat excretions, and the volume of 20 mL also correspond to the volume of a single event of cat urination.

A comparison with a store-bought conventional type of Bentonite-based kitty litter as an example of prior art was made in the same manner as described above, and the number of times that the product could be used for was calculated. The results are shown in Table 2 along with the bulk density.

**Table 2**

| Sample Name | Bulk Density (g/cm³) | Weight of Clumps Formed with 20 mL Saline Solution (g) | Number of Times of Use |
|---|---|---|---|
| Product Example 1 | 0.29 | 29.0 | 322 |
| Product Example 2 | 0.30 | 28.0 | 375 |
| Prior Art Example | 1.00 | 65.0 | 222 |

According to Table 2, the weight of a clump formed when 20 mL of saline water applied to the kitty litters of the Product Examples 1 and 2 were, on average, 29.0 g and 28.0 respectively while the same of the prior art Bentonite-based kitty litter ("Prior art Example") was 65.0 g. Thus, the weights of the clump of the Product Examples were proven less than half of the Prior art Example, which shows the former have much higher water-absorption capacity than the latter.

The kitty litter of the Product Example 1 had an average bulk density of 0.29 g/cm³, and the weight of the clump moistened by 20 mL saline water was, on average, 29.0 g. On the other hand, the assumed volume of urine in a single event is 20 mL (assumed to be equal to 20 g), thus, the kitty litter consumed for absorption of a single event of excretion is estimated to be 9.0 g. Furthermore, if a quantity of 10 L is packaged, the kitty litter of the Product Example 1 weighs 2.9 kg. Based on this result, it becomes clear that the kitty litter of Product Example 1 could be used for 322 times (= 2900 g ÷ 9 g).

The kitty litter of the Product Example 2 had an average bulk density of 0.3 g/ cm³, and the weight of the clump moistened by 20 mL saline water was, on average, 28.0 g. On the other hand, the assumed volume of urine in a single event is 20 mL (assumed to be equal to 20 g), thus, the kitty litter consumed for absorption of a single event of excretion is estimated to be 8.0 g. Furthermore, if a quantity of 10 L is packaged, the kitty litter of the Product Example 2 weighs 3.0 kg. Based on this result, it becomes clear that the kitty litter of Product Example 2 could be used for 375 times (= 3000 g ÷ 8 g).

In comparison, the kitty litter of the Prior Art Example had a bulk density of 1.0 g/cm³ and the weight of the clumps moistened by 20 mL saline water was 65.0 g. On the other hand, the assumed volume of urine in a single event is 20 mL (assumed to be equal to 20 g), thus, the kitty litter consumed for absorption of a single event of excretion is estimated to be 45.0 g. Furthermore, if a quantity of 10 L is packaged, the kitty litter of the Prior Art Example has a weight of 10 kg, thus, it becomes clear that the kitty litter of the Prior Art Example could be used for 222 times (=10000 g ÷ 45 g).

The above comparison shows that the Product Examples 1 and 2 have greatly higher absorption capacity than the Prior Art Example. In other words, the kitty litters in accordance with embodiments of the present invention can be used for more times or for longer time of period than the conventional type of mineral-based Bentonite kitty litter if the same volume, say 10 L, is purchased. If a powdered highly water absorbable resin is added when making the kitty litter, according to embodiments of the present invention, the number of times and the period that it can be used for would increase.

Additionally, the antibacterial properties and the repellant properties of these two samples of new kitty litters were evaluated. First after spreading the kitty litter out, had a cat infested with fleas urinate in the center of the kitty litter. The cat infested with fleas used this kitty litter for 10 days and the clumps were not removed. There was no foul odor in both kitty litters after use. From this observation, it became to known that these kitty litters had antibacterial and odor-absorbing properties.

Afterward, these kitty litters were left for one month and observed. As a result, there were no flea or mite eggs discovered in both kitty litters even after one month, it was confirmed that these kitty litters of the present invention have antibacterial and repellant properties. Moreover, a pleasant fragrance was sensed by pet owners.

As described above, the kitty litter for embodiments of the present invention does not contain any powdered Bentonite and is made of a mixture of 100% natural organic materials including the Cedar Wood Residues and a powdered binder. Therefore, it can be combusted by conventional incinerators after use. Even if it were buried, it would give no adverse influences to the environment such as soil pollution and could be flushed down the toilet.

### MODIFICATION

Without being limited to the embodiments of the inventions described above, it is possible for various modifications and changes to be made, and these would be within the range of the present invention as recited in the claims.

For example only, the raw material 11 to be used in the mixing process (S1001) was specified as the Cedar Wood Residues. However, the raw material to be used should not be limited to this example. It can be the Cedar Wood Powders or a mixture of the Cedar Wood Powders and the Cedar Wood Residues.

The granules formed by the granulating device 107 in the granulation process (S1002) are pillar shaped with a diameter of 3.5 mm. However, the pillar shaped granules may occasionally contain longer pieces having length of 30 - 80 mm and it is acceptable to break up those longer pieces using a crushing/sizing machine. This crushing/sizing machine is a vertical-type machine, equipped with a cylindrical vessel, having multiple holes on the wall surfaces, to supply the granules, a rotational axis arranged inside of the cylindrical vessel, and multiple cutters fitted to this rotational axis. This crushing/sizing machine can make the length of the granules be 4 - 8 mm or shorter.

A disposal material for animal excretions is granules of a mixed material which contains (i) 60 - 90 parts of weight of powdered cedar wood material (cuttings, shavings and sawdust) and/or the cedar wood materials remaining as the residues after extracting cedar oil from those cedar wood materials, having sizes of less than or equal to 10 mesh, and (ii) 5 -15 parts of weight of a powdered binder. The granules thus manufactured have a bulk density of 0.25 - 0.6 g/cm³ and an absorption capacity of 1.1 - 2.0 times its own weight. This disposal material for animal excretions is 100% natural organic, and can be incinerated after use. It has antibacterial, repellant, and fragrant properties, and can be flushed down the toilet.

## Claims

1. A disposal material for animal excretions, which is granules of a powder mixture, comprising:
(i) 60 - 90 parts of weight of powdered cedar wood materials and/or cedar wood materials remaining as the residues after extracting cedar oil from those powdered cedar wood materials, having sizes less than or equal to 10 mesh, and (ii) 5-15 parts of weight of a powdered binder, having a bulk density of 0.25 - 0.6 g/cm³, with an absorption capacity of 1.1 - 2.0 times its own weight.

2. A disposal material for animal excretions as claimed in claim 1, wherein said powder mixture further comprising:
3 -10 parts of weight of a powdered highly water absorbable resin and has an absorption capacity of 1.5 - 3.0 times its own weight.

3. A manufacturing method of the disposal material for animal excretions comprising:
(i) a mixing process to mix uniformly at a rotational speed of 300 - 500 rpm a powder mixture of 60 - 90 parts of weight of powdered cedar wood materials and/or cedar wood materials remaining as the residues after extracting cedar oil from those powdered cedar wood materials, having sizes less than or equal to 10 mesh, and 5 -15 parts of weight of a powdered binder, (ii) a granulation process to granulate the wet mixture obtained by the mixing process as above referred, and (iii) a drying process to dry by hot-air the wet granules obtained by the granulation process to get the dried granules having a bulk density of 0.25 - 0.6 g/cm³ and an absorption capacity of 1.1 - 2.0 times its own weight.

4. A manufacturing method of the disposal material for animal excretions as claimed in claim 3, further comprising:
mixing of the powder mixture within a mixing device which is equipped with at least a first agitator and a second agitator, wherein the second agitator rotates in the opposite direction to the rotational direction of the first agitator.

5. A manufacturing method of the disposal material for animal excretions as claimed in claim 3, further comprising:
granulation of the wet mixture by a granulating device which is equipped with a screen having multiple holes of diameter of 2.5 - 5.5 mm and a thickness of 2.5 - 6.5 mm.

6. A manufacturing method of the disposal material for animal excretions as claimed in claim 3 comprising:
hot-air drying of the wet granules by a fluidized bed dryer, wherein the hot air is blown into a batch of the granules and the internal temperature of the fluidized bed dryer is kept at 80 - 95 °C.

7. A manufacturing method of the disposal material for animal excretions comprising:
(i) a mixing process to mix uniformly at a rotational speed of 300 - 500 rpm a powder mixture of (a) 60 - 90 parts of weight of powdered cedar wood materials and/or cedar wood materials remaining as the residues after extracting cedar oil from those powdered cedar wood materials, having sizes less than or equal to 10 mesh, (b) 3 -10 parts of weight of a powdered highly water absorbable resin, and (c) 5 -15 parts of weight of a powdered binder, (ii) a granulation process to granulate the wet mixture obtained by the mixing process as above referred, and (iii) a drying process to dry by hot-air the wet granules obtained by the granulation process to get the dried granules having a bulk density of 0.25 - 0.6 g/cm³ and an absorption capacity of 1.5 - 3.0 times its own weight.

8. A manufacturing method of the disposal material for animal excretions as claimed in claim 7 further comprising:
mixing of the powder mixture within a mixing device which is equipped with at least a first agitator and a second agitator, wherein the second agitator rotates in the opposite direction to the rotational direction of the first agitator.

9. A manufacturing method of the disposal material for animal excretions as claimed in claim 7 further comprising:
granulation of the wet mixture by a granulating device which is equipped with a screen having multiple holes of diameter of 2.5 - 5.5 mm and a thickness of 2.5 - 6.5 mm.

10. A manufacturing method of the disposal material for animal excretions as claimed in claim 7 comprising:
hot air-drying of the wet granules by a fluidized bed dryer, wherein the hot air is blown into a batch of the wet granules and the internal temperature of the fluidized bed dryer is kept at 80 - 95 °C.
